# EUROPEAN PATENT APPLICATION

(11) **EP 4 550 623 A1**
(43) Date of publication of application: **07.05.2025**
(21) Application number: 24765929.5
(22) Date of filing: 09.09.2024
(51) Int. Cl.: H02J 50/00, H02J 50/90, H01F 7/02, H02J 50/10, H01F 38/14, H02J 50/80

(54) **ELECTRONIC DEVICE COMPRISING TRANSMISSION COIL**

(30) Priority: 11.09.2023 KR 20230120441; 13.12.2023 KR 20230180668
(71) Applicant: Samsung Electronics Co., Ltd, Suwon-si, Gyeonggi-do 16677 (KR)
(72) Inventor: LEE, Chongmin, Suwon-si Gyeonggi-do 16677 (KR); PARK, Seho, Suwon-si Gyeonggi-do 16677 (KR); YEO, Sungku, Suwon-si Gyeonggi-do 16677 (KR); KIM, Yusu, Suwon-si Gyeonggi-do 16677 (KR); PARK, Byunghwa, Suwon-si Gyeonggi-do 16677 (KR)
(74) Representative: Appleyard Lees IP LLP
(86) International application number: PCT/KR2024/013589
(87) International publication number: WO 2025/058346

(57) **Abstract**

An electronic device according to an embodiment of the disclosure may include a seating part, and a transmitting part protruding from the seating part. The transmitting part may include a transmitting part housing that forms the exterior of the transmitting part, and a transmitting coil disposed inside the transmitting part housing and used to transmit power to an external electronic device. The transmitting part housing may include a first region in which the transmitting coil is disposed and which extends with a first radius of curvature, and a second region which extends from the first region with a second radius of curvature that is smaller than the first radius of curvature.

## Description

### [Technical Field]

The disclosure relates to an electronic device including a transmitting coil.

### [Background Art]

An electronic device may include a transmitting coil to transmit power to an external electronic device disposed thereon. The external electronic device may be a device that is wearable on a portion of a user's body (e.g., an electronic device in the form of a smart ring). The external electronic device may receive power from the electronic device to charge the power required for operation.

The electronic device may include a seating part on which an external electronic device is seated and a transmitting part configured to transmit power to the external electronic device. The external electronic device may be disposed on one surface of the seating part of the electronic device. The transmitting part of the electronic device may protrude from one surface of the seating part. When the external electronic device is disposed on the electronic device, a transmitting part of the electronic device may be inserted into an opening in the external electronic device.

The above information may be provided as a related art for the purpose of helping understanding of the disclosure. None of the foregoing content can be claimed as prior art related to the disclosure or used to determine prior art.

### [Disclosure of Invention]

### [Technical Problem]

An external electronic device may be formed to have various sizes to correspond to users' body sizes (e.g., finger thicknesses).

When manufacturing electronic devices, which have transmitting parts having different sizes, respectively, to correspond to external electronic devices having different sizes, the manufacturing costs of the electronic devices may increase.

In order to transmit power to external electronic devices having different sizes, electronic devices with sizes corresponding to the external electronic devices are required, which may reduce a user's convenience in using the external electronic devices.

When an external electronic device is located on an electronic device that does not correspond to the size of the external electronic device, the separation distance between the coil of the external electronic device and the coil of the electronic device may become far, thereby reducing the power charging efficiency of the external electronic device.

### [Solution to Problem]

An electronic device according to an embodiment of the disclosure includes a seating part and a transmitting part protruding from the seating part. According to an embodiment, the transmitting part includes a transmitting part housing that forms the exterior of the transmitting part, and a transmitting coil disposed inside the transmitting part housing and configured to transmit power to an external electronic device. According to an embodiment, the transmitting part housing includes a first region in which the transmitting coil is disposed and which extends with a first radius of curvature, and a second region which extends from the first region with a second radius of curvature that is smaller than the first radius of curvature.

According to an embodiment of the disclosure, a power charging system for an electronic device includes a housing formed in a ring shape including an insertion opening, and a first electronic device including a coil disposed inside the housing and configured to transmit and receive power. According to an embodiment, the power charging system for an electronic device includes a second electronic device on which a first electronic device is disposed and which is configured to transmit power to the first electronic device. In an embodiment, the second electronic device includes a seating part configured to support the first electronic device on one surface, and a transmitting part protruding from the seating part and inserted into the insertion opening in the first electronic device. The transmitting part of the second electronic device includes a transmitting part housing that forms the exterior of the transmitting part, and a transmitting coil disposed inside the transmitting part housing and configured to transmit power to the first electronic device. The transmitting part housing of the second electronic device includes a first region in which the transmitting coil is disposed and which extends with a first radius of curvature, and a second region which extends from the first region with a second radius of curvature that is smaller than the first radius of curvature.

According to an embodiment of the disclosure, an electronic device may include a housing having a ring shape. According to an embodiment, the electronic device includes a battery disposed inside the housing. According to an embodiment, the electronic device includes a printed circuit board disposed inside the housing and electrically connected to the battery. According to an embodiment, the electronic device includes a coil disposed inside the housing and configured to transmit and receive power. According to an embodiment, the electronic device includes a magnet disposed between a side surface of the housing and the battery.

### [Advantageous Effects of Invention]

According to an embodiment of the disclosure, an electronic device includes a transmitting part housing formed to have dual radii of curvature. Thus, external electronic devices with various sizes can be disposed on the electronic device.

According to an embodiment of the disclosure, since one electronic device is capable of corresponding to external electronic devices with various sizes, manufacturing costs for individually manufacturing electronic devices corresponding to external electronic devices can be reduced.

According to an embodiment of the disclosure, an electronic device allows external electronic devices with various sizes to be disposed in contact with the electronic device. Thus, charging efficiency can be maintained at a predetermined standard or higher regardless of the size of an external electronic device.

According to an embodiment of the disclosure, an electronic device allows external electronic devices with various sizes to be disposed in contact with the electronic device. Thus, the coupling coefficient between the coil of the electronic device and the coil of an external electronic device can be maintained at a predetermined value or more.

According to an embodiment of the disclosure, an electronic device is capable of using a magnet to cause an external electronic device to be disposed at a predetermined position thereon.

According to an embodiment of the disclosure, an electronic device is capable of preventing or reduce magnetic force lines generated from a magnet from affecting a transmitting coil of the electronic device.

### [Brief Description of Drawings]

FIG. 1 is a block diagram of an electronic device according to an embodiment of the disclosure in a network environment.
FIGS. 2A and 2B are views illustrating a power charging system according to an embodiment of the disclosure.
FIGS. 3A, 3B, and 3C are views illustrating a transmitting part and an external electronic device according to an embodiment of the disclosure.
FIGS. 4A, 4B, and 4C are views illustrating a transmitting part and an external electronic device according to an embodiment of the disclosure.
FIG. 5 is a view illustrating a third transmitting part magnet and a third external magnet according to an embodiment of the disclosure.
FIGS. 6A and 6B are views illustrating transmitting part magnets and external magnets according to an embodiment of the disclosure.
FIGS. 7A, 7B, and 7C are views illustrating an external electronic device and magnets according to an embodiment of the disclosure.

### [Mode for the Invention]

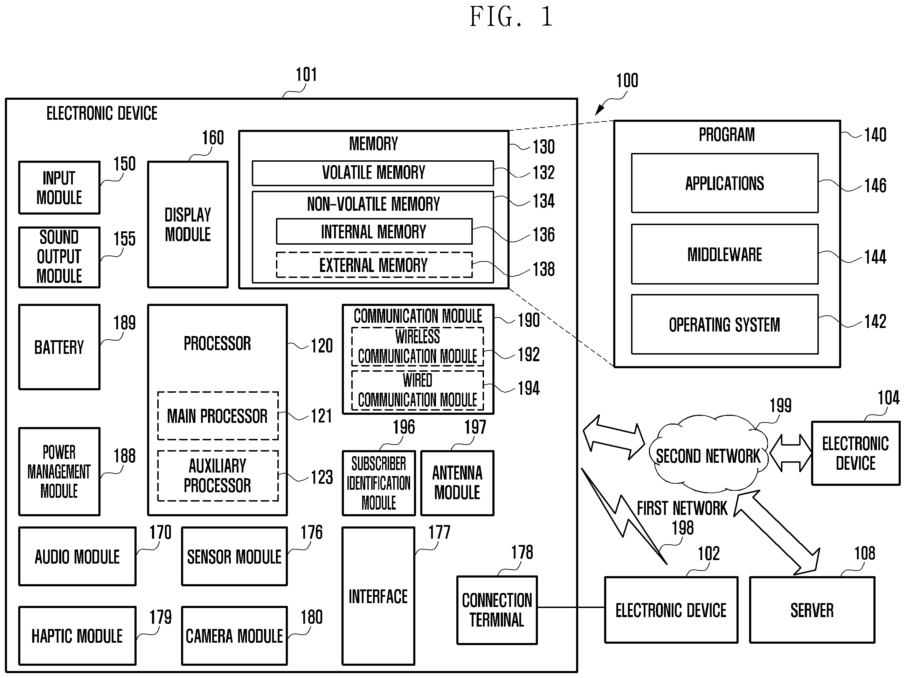

FIG. 1 is a block diagram illustrating an electronic device 101 in a network environment 100 according to various embodiments.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 and/or an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) (e.g., speaker or headphone) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., through wires) or wirelessly. According to an embodiment, the interface 177 may include, for example, a high-definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., an application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, Wi-Fi direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN))). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large-scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., an mmwave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

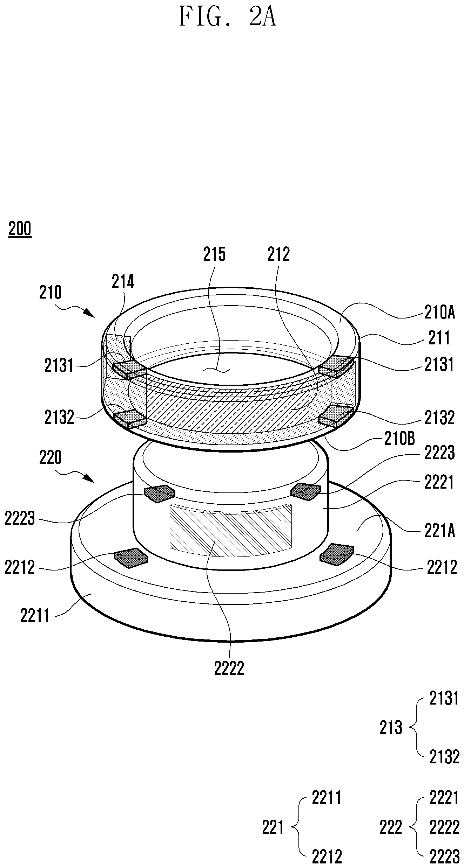

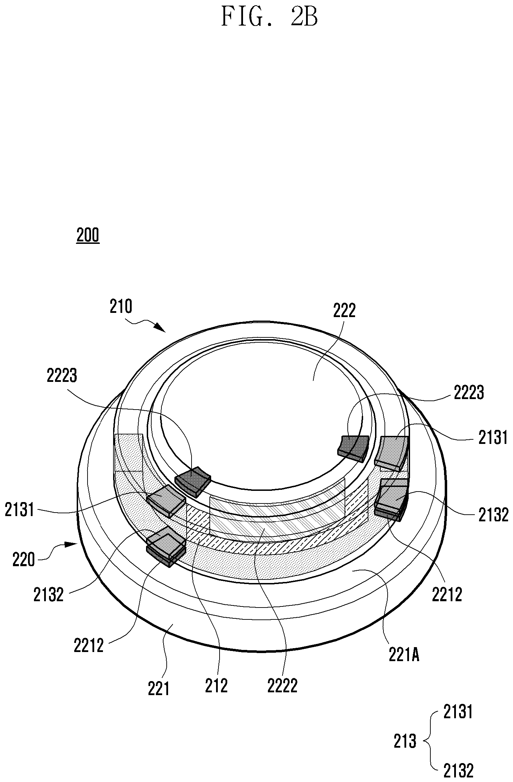

FIGS. 2A and 2B are views illustrating a power charging system 200 according to an embodiment of the disclosure.

The power charging system 200 according to an embodiment of the disclosure includes a first electronic device 210 and/or a second electronic device 220.

FIG. 2A is a view illustrating a state before the first electronic device 210 is disposed on the second electronic device 220, according to an embodiment. FIG. 2B is a view illustrating a state after the first electronic device 210 is disposed on the second electronic device 220, according to an embodiment.

In an embodiment, the first electronic device 210 is a device that is wearable on at least a portion of a user's body. For example, the first electronic device 210 may be a device that has a ring shape so that is wearable on a portion of a user's body.

In an embodiment, the second electronic device 220 is a device on which the first electronic device 210 may be seated. In an embodiment, the second electronic device 220 is configured to transmit power to the first electronic device 210. For example, the first electronic device 210 may receive power transmitted by the second electronic device 220 while the second electronic device 220 is seated thereon.

In an embodiment, the first electronic device 210 includes a housing 211, a coil 212, a magnet 213, a battery 214, and/or an insertion opening 215.

In an embodiment, the housing 211 forms the exterior of the first electronic device 210. In an embodiment, the housing 211 may has a ring shape. For example, the housing 211 may extend along the circumference of a circle with a predetermined radius.

According to an embodiment, other components of the first electronic device 210 are disposed in the housing 211. For example, the coil 212, the magnet 213, and the battery 214 are disposed in the housing 211.

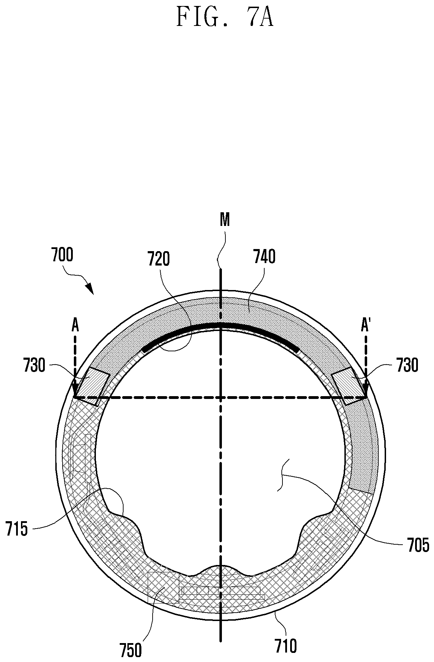

In an embodiment, a molded part (e.g., 715, see FIG. 7A) is formed inside the housing 211. For example, after the coil 212, the magnet 213, and the battery 214 are disposed in the housing 211, a molding material is disposed to cover the coil 212, the magnet 213, and the battery 214, and the molded part is formed.

In an embodiment, the first electronic device 210 includes an insertion opening 215 located inside the housing 211. For example, when the user of the first electronic device 210 wears the first electronic device 210, a portion of the user's body may be inserted into the insertion opening 215.

In an embodiment, the magnet 213 includes a first side magnet 2131 and/or a second side magnet 2132. The first side magnet 2131 is disposed to face a first side surface 210A of the first electronic device 210. The second side magnet 2132 is disposed to face the second side surface 210B located on the opposite side of the first side 210A of the first electronic device 210. For example, the first side magnet 2131 and/or the second side magnet 2132 may include multiple magnets.

In an embodiment, the magnets 213 serve to cause the first electronic device 210 to maintain a predetermined position in the second electronic device 220.

In an embodiment, the coil 212 serves to transmit or receive power. For example, referring to FIG. 2B, after being disposed to face the transmitting coil 2222 of the second electronic device 220, the coil 212 of the first electronic device 210 receives power is and then the second electronic device 220 is delivered with (or receives) power from the transmitting coil 2222.

In an embodiment, the battery 214 serves to supply power to at least one component of the first electronic device 210. For example, the battery 214 may be formed such that at least a portion thereof is bent along the direction in which the housing 211 extends.

In an embodiment, the second electronic device 220 includes a seating part 221 and/or a transmitting part 222.

In an embodiment, the seating part 221 includes seating part housings 2211 and/or seating part magnets 2212.

In an embodiment, the seating part housing 2211 forms the exterior of the seating part 221. In an embodiment, the seating part housing 2211 may be formed to include a circular cross-section.

Although FIG. 2A illustrates that the seating part housing 2211 has a circular shape, this is an example, and the shape of the seating unit housing 2211 may not be limited thereto. For example, the seating part housing 2211 may be formed to include a rectangular shape.

Referring to FIGS. 2A and 2B, the seating part housing 2211 forms a seating surface 221A of the seating part 221. Referring to FIG. 2B, according to an embodiment, the first electronic device 210 is located (or disposed) on the seating surface 221A of the seating part 221.

In an embodiment, the seating part magnets 2212 are disposed in the seating part housing 2211. According to an embodiment, the seating part magnets 2212 are disposed inside the seating part housing 2211.

In an embodiment, the seating part magnets 2212 are disposed outside the seating part housing 2211. For example, the magnetic seating part 2212 may be disposed on the seating surface 221A, which is an outer surface of the seating part housing 2211.

In an embodiment, the seating part magnets 2212 are disposed in the transmitting part housing 2221. According to an embodiment, the seating part magnets 2212 are disposed inside the transmitting part housing 2221.

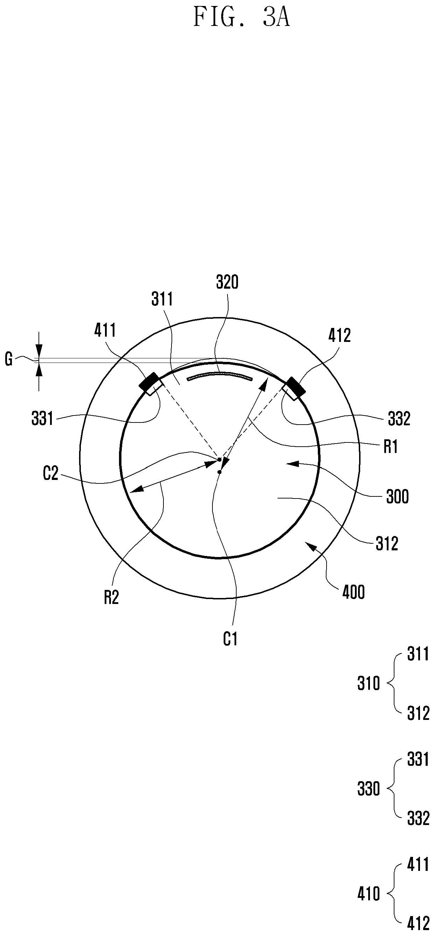

In an embodiment, the magnets of the second electronic device 220 (e.g., a first transmitting part magnet 331 (2212 and 2223) in FIG. 3A, and a second transmitting magnet 332 (2212 and 2223) in FIG. 3A) are disposed in the transmitting part housing 2221 and/or the seating part housing 2211. In an embodiment, the seating part magnets 2212 and the transmitting part magnets 2223 of FIG. 2 refer to the transmitting part magnets 331 and 332 of FIG. 3A.

In an embodiment, when the first electronic device 210 is located on the second electronic device 220, the seating part magnets 2212 of the seating part 222 are disposed at positions corresponding to the second side magnets 2132 of the first electronic device 210. For example, when the first electronic device 210 is located on the second electronic device 220, the seating part magnets 2212 of the seating part 222 face the second side magnets 2132 of the first electronic device 210 with the seating part housing 2211 and the housing 211 interposed therebetween.

In an embodiment, when the first electronic device 210 is located on the second electronic device 220, the seating part magnets 2212 of the seating part 222 are disposed at positions corresponding to the first side magnets 2131 of the first electronic device 210. For example, when the first electronic device 210 is located on the second electronic device 220, the seating part magnets 2212 of the seating part 222 face the first side magnets 2131 of the first electronic device 210 with the seating part housing 2211 and the housing 211 interposed therebetween.

In an embodiment, the transmitting part 222 includes a transmitting part housing 2221, a transmitting coil 2222, and/or transmitting part magnets 2223.

In an embodiment, the transmitting part housing 2221 forms the exterior of the transmitting part 222.

In an embodiment, the transmitting part housing 2221 extends to protrude in a direction away from one surface of the seating part housing 2211. For example, the transmitting part housing 2221 is formed integrally with the seating part housing 2211 and refers to the housing of the portion where the transmitting part 222 is located.

In an embodiment, the width of the transmitting part housing 2221 is smaller than the width of the seating part housing 2211.

In an embodiment, the transmitting part housing 2221 is formed in a shape corresponding to the insertion opening 215 of the first electronic device 210. For example, when the insertion opening 215 includes a circular shape, the transmitting part housing 2221 has a cylindrical shape with a circular cross-section.

In an embodiment, when the first electronic device 210 is located on the second electronic device 220, the transmitting part housing 2221 is inserted into the insertion opening 215 in the first electronic device 210. The transmitting part housing 2221 is inserted into the insertion opening 215 of the first electronic device 210, and the first electronic device 210 maintains a predetermined position in the second electronic device 220.

In an embodiment, the transmitting coil 2222 and the transmitting part magnets 2223 are disposed inside the transmitting part housing 2221.

In an embodiment, the transmitting coil 2222 serves to transmit power to a device located outside the second electronic device 220. For example, when the first electronic device 210 is located on the second electronic device 220, the second electronic device 220 transmits power to the first electronic device 210 using the transmitting coil 2222.

Referring to FIG. 2B, when the first electronic device 210 is located on the second electronic device 220, the coil 212 of the first electronic device 210 is disposed at a position corresponding to the transmitting coil 2222 of the second electronic device 220 and receives power from the transmitting coil 2222.

In an embodiment, when the first electronic device 210 is located on the second electronic device 220, the transmitting part magnets 2223 of the transmitting part 222 are disposed at positions corresponding to the first side magnets 2131 of the first electronic device 210. For example, when the first electronic device 210 is located on the second electronic device 220, the transmitting part magnets 2223 of the seating part 222 face the first side magnets 2131 of the first electronic device 210 with the transmitting part housing 2221 and the housing 211 interposed therebetween.

In an embodiment, when the first electronic device 210 is located on the second electronic device 220, the first electronic device 210 maintains the predetermined position through an attraction force acting between the magnet 213 of the first electronic device 210 and the magnets 2212 and 2223 of the second electronic device 220.

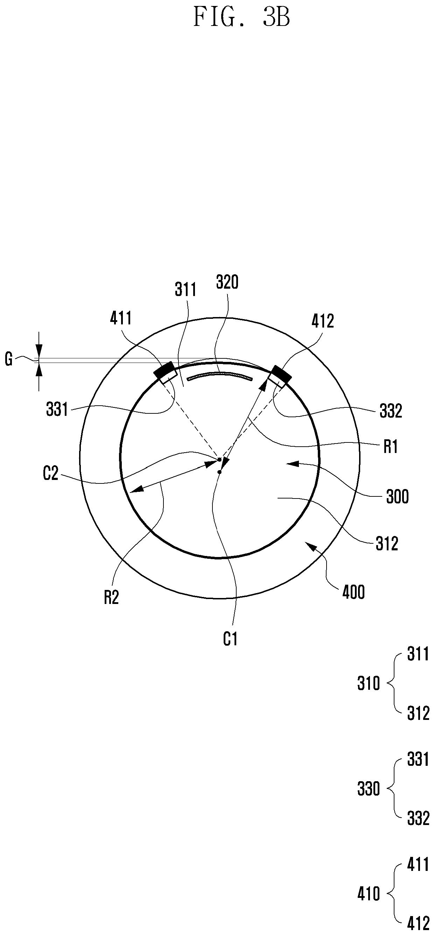

FIGS. 3A and 3B are views illustrating a transmitting part 300 and an external electronic device 400 according to an embodiment of the disclosure.

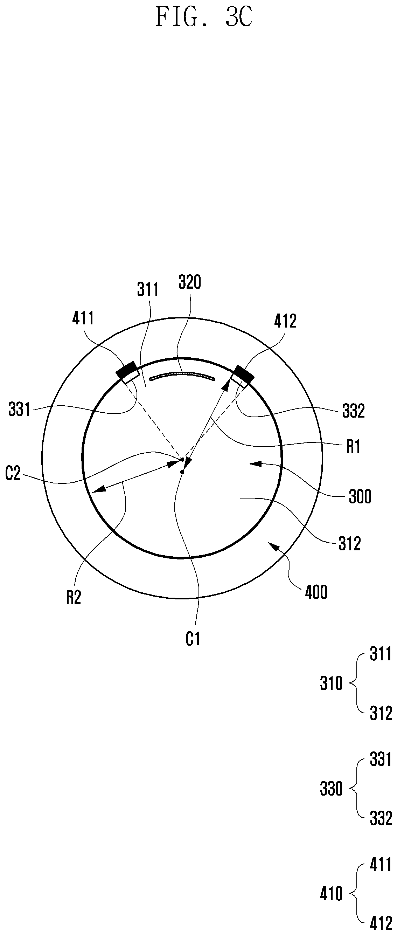

FIG. 3A is a view illustrating the transmitting part 300 in which a transmitting part magnet 330 is located in a second region 312. FIG. 3B is a view illustrating the transmitting part 300 in which a transmitting part 300 is located in a first region 311. FIG. 3C is a view illustrating an external electronic device 400 having two radii of curvature R1 and R2.

The transmitting part 300 of FIGS. 3A and 3B refers to the transmitting part 222 of FIGS. 2A and 2B or may include at least some of the components of the transmitting part 222.

The external electronic device 400 of FIGS. 3A, 3B, and 3C refers to the first electronic device 210 of FIGS. 2A and 2B or may include at least some of the components of the first electronic device 210.

In an embodiment, the transmitting part 300 includes a transmitting part housing 310, a transmitting coil 320, and/or transmitting part magnets 330.

In an embodiment, the transmitting part housing 310 forms the exterior of the transmitting part 300. Other components of the transmitting part 300 (e.g., the transmitting coil 320) are disposed inside the transmitting part housing 310.

In an embodiment, the transmitting part housing 310 includes a first region 311 and/or a second region 312.

In an embodiment, the first region 311 and the second region 312 extend with different radii of curvature.

In an embodiment, the first region 311 is a region of which the perimeter extends with a first radius of curvature R1. For example, the perimeter of the first region 311 extends from the first center C1 with the first radius of curvature R1.

In an embodiment, the second region 312 is a region of which the perimeter extends with a second radius of curvature R2. For example, the perimeter of the second region 312 extends from the second center C2 with the second radius of curvature R2.

In an embodiment, the first radius of curvature R1 is longer than the second radius of curvature R2. For example, the first radius of curvature R1 may range from about 15 mm to 17 mm. The second radius of curvature R2 may range from about 14 mm to 15 mm. However, the disclosure is not limited thereto.

In an embodiment, the length of the second region 312 that extends along the perimeter of the transmitting part housing 310 is longer than the length of the first region 311 that extends along the perimeter of the transmitting part housing 310.

In an embodiment, the transmitting coil 320 serves to transmit power to an external device. For example, the transmitting part 300 transmits power to an external electronic device 400 using the transmitting coil 320.

In an embodiment, the transmitting coil 320 is disposed in the first region 311 of the transmitting part housing 310. In an embodiment, the perimeter of the first region 311 of the transmitting part housing 310 is longer than the transmitting coil 320.

In an embodiment, the transmitting magnet 330 includes a first transmitting magnet 331 and/or a second transmitting part magnet 332. In an embodiment, the transmitting part magnet 330 of FIGS. 3A and 3B refers to the transmitting part magnet 2223 of FIG. 2A.

In an embodiment, the radius of curvature of the perimeter of the transmitting part housing 310 is formed differently with reference to the boundary between the first region 311 and the second region 312. In an embodiment, the transmitting part magnet 330 is disposed such that at least a portion thereof is located at the boundary between the first region 311 and the second region 312.

Referring to FIG. 3A, according to an embodiment, the transmitting part magnet 330 is disposed in the second region 312 of the transmitting part housing 310. In an embodiment, the transmitting part magnet 330 is disposed to face the peripheral surface of the transmitting part housing 310. In an embodiment, the first transmitting part magnet 331 is disposed at one side of the first region 311 to face the peripheral surface of the transmitting part housing 310, and the second transmitting part magnet 332 is disposed at the other side of the first region 311 to face the peripheral surface of the transmitting part housing 310.

Referring to FIG. 3B, according to an embodiment, the transmitting part magnet 330 is disposed in the first region 311 of the transmitting part housing 310. In an embodiment, the first transmitting part magnet 331 and the second transmitting part magnet 332 are disposed in a portion of the first region 311 adjacent to the second region 312.

In an embodiment, the transmitting coil 320 is disposed at position that does not overlap the transmitting part magnet 330. For example, the transmitting coil 320 is disposed between the first transmitting part magnet 331 and the second transmitting part magnet 332.

According to an embodiment, since the transmitting coil 320 is disposed at a position that does not overlap the transmitting part magnet 330, the transmitting coil 320 is prevented or has a reduced likelihood of being affected by magnetic force lines generated by the transmitting part magnet 330.

In an embodiment, the external electronic device 400 includes a circular shape with a predetermined radius. For example, the external electronic device 400 is configured such that the inner side thereof has circular shape with the second radius of curvature R2.

In an embodiment, the external electronic device 400 includes an external magnet 410.

In an embodiment, the external magnet 410 includes a first external magnet 411 and/or a second external magnet 412. In an embodiment, the external magnet 410 of FIGS. 3A and 3B refers to the magnet 213 of FIG. 2A.

In an embodiment, when the external electronic device 400 is located on the transmitting part 300, the external magnet 410 is disposed at a position corresponding to the transmitting part magnet 330. For example, the first external magnet 411 is disposed at a position corresponding to the first transmitting part magnet 331. The second external magnet 412 is disposed at a position corresponding to the second transmitting part magnet 332.

Referring to FIG. 3A, when the transmitting part magnet 330 is disposed in the second region 312 of the transmitting part housing 310, the external magnet 410 of the external electronic device 400 is disposed at a position corresponding to the transmitting part magnet located in the second region 312.

Referring to FIG. 3B, when the transmitting part magnet 330 is disposed in the first region 311 of the transmitting part housing 310, the external magnet 410 of the external electronic device 400 is disposed at a position corresponding to the transmitting part magnet located in the second region 311.

In an embodiment, an attraction force may act between the external magnet 410 and the transmitting part magnet 330. For example, when the external electronic device 400 is located on the transmitting part 300, the magnet 330 and the external magnet 410 have different poles facing each other, so that an attraction force is generated between the magnet 330 and the external magnet 410.

In an embodiment, when the external electronic device 400 is located on the transmitting part 300, the external electronic device 400 is located at a predetermined position using the attraction force acting between the external magnet 410 and the transmitting part magnet 330. For example, by the attraction force acting between the external magnet 410 and the transmitting part magnet 330, the transmitting coil 320 of the transmitting part 300 is disposed to face the coil (see, e.g., 212 in FIG. 2A) of the external electronic device 400 with the transmitting part housing 310 interposed therebetween. In an embodiment, power may be transmitted between the transmitting part 300 and the external electronic device 400 via the transmitting coil 320 of the transmitting part 300 and the coil (see, e.g., 212, in FIG. 2A) of the external electronic device 400.

In an embodiment, when the external electronic device 400 is located on the transmitting part 300, the second region 312 of the transmitting part housing 310 is in contact with the external electronic device 400. For example, the inner surface of the external electronic device 400 and the perimeter of the second region 312 of the transmitting part housing 310 each extend with the second radius of curvature R2, so that the inner surface of the external electronic device 400 is in contact with the perimeter of the second region 312 of the transmitting part housing 310.

In an embodiment, when the external electronic device 400 is located on the transmitting part 300, the second region 312 of the transmitting part housing 310 is in contact with the external electronic device 400 and supports the external electronic device 400. Since the second region 312 of the transmitting part housing 310 is in contact with the external electronic device 400, movement of the external electronic device 400 by an external force may be reduced, so that it may be easy for the external electronic device 400 to maintain a predetermined position.

In an embodiment, when the external electronic device 400 is located on the transmitting part 300, the first region 311 of the transmitting part housing 310 is spaced apart from the external electronic device 400. Referring to FIG. 3A, the first region 311 and the inner surface of the external electronic device 400 are spaced apart from the first region 311 by a distance equal to or less than a separation distance G. Since the first region 311 of the transmitting part housing 310 has the first radius of curvature R1, and the inner surface of the external electronic device 400 has the second radius of curvature R2, the first region 311 of the transmitting part housing 310 is spaced apart from the external electronic device 400, rather than being in contact with the external electronic device 400.

In an embodiment, the separation distance G has no more than a predetermined length. As the separation distance G increases, the coupling coefficient between the transmitting coil 320 of the transmitting part 300 and the coil (see, e.g., 212 in FIG. 2A) of the external electronic device 400 decreases. The separation distance G has no more than a predetermined length such that the coupling coefficient between the transmitting coil 320 of the transmitting part 300 and the coil of the external electronic device 400 (see, e.g., 212 in FIG. 2A) is about 0.2 or more.

In an embodiment, as the separation distance G increases, the power charging efficiency of the external electronic device 400 decreases. In an embodiment, the separation distance G is configured to no more than a predetermined length such that the power charging efficiency of the external electronic device 400 is about 60% or more.

Referring to FIG. 3C, the external electronic device 400 according to an embodiment has two different radii of curvature R1 and R2. In an embodiment, a partial area of the external electronic device 400 has the first radius of curvature R1, and the remaining area of the external electronic device 400 has the second radius of curvature R2. For example, the region of the external electronic device 400 facing the first region 311 of the transmitting part housing 310 extends with the first radius of curvature R1, and the remaining region of the external electronic device 400 extends with the second radius of curvature R2 that is smaller than the first radius of curvature R1.

In an embodiment, when the external electronic device 400 having the first radius of curvature R1 and the second radius of curvature R2 is located on the transmitting part 300, the inner surface of the external electronic device 400 (e.g., the surface of the external electronic device 400 facing the transmitting part housing 310) and the perimeter of the transmitting part housing 310 are in contact with each other. Alternatively, when the external electronic device 400 having the first radius of curvature R1 and the second radius of curvature R2 is located on the transmitting part 300, the spacing between the inner surface of the external electronic device 400 and the transmitting part housing 310 is reduced to no more than a predetermined length.

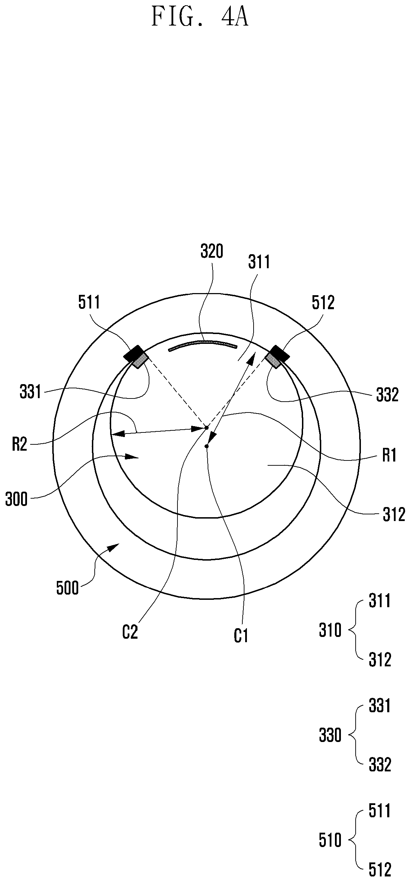

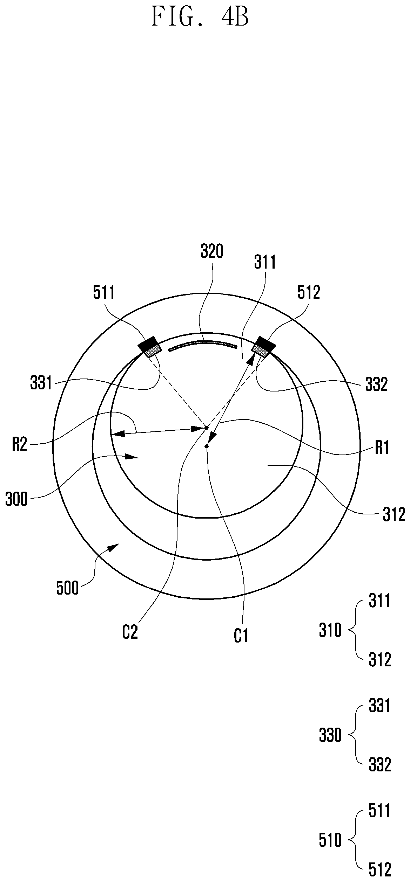

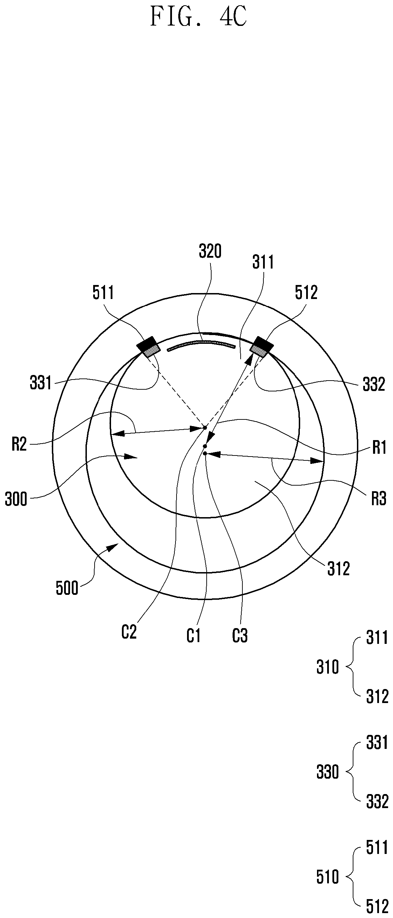

FIGS. 4A, 4B, and 4C are views illustrating a transmitting part 300 and an external electronic device 500 according to an embodiment of the disclosure.

FIG. 4A is a view illustrating the transmitting part 300 in which a transmitting part magnet 330 is located in a second region 312. FIG. 4B is a view illustrating the transmitting part 300 in which a transmitting part 300 is located in a first region 311. FIG. 4C is a view illustrating an external electronic device 500 having two radii of curvature R1 and R3.

The external electronic device 500 of FIGS. 4A, 4B, and 4C refers to the first electronic device 210 of FIGS. 2A and 2B or may include at least some of the components of the first electronic device 210.

The external electronic device 500 of FIGS. 4A, 4B, and 4C has a larger radius than the external electronic device 400 of FIGS. 3A and 3B. For example, the external electronic device 400 of FIGS. 3A and 3B may extend to have a second radius of curvature R2, and the external electronic device 500 of FIGS. 4A and 4B may extend to have a first radius of curvature R1 and/or a third radius of curvature R3 that is longer than the second radius of curvature R2.

In an embodiment, the external magnet 500 includes a first external magnet 511 and/or a second external magnet 512. In an embodiment, the external magnet 510 of FIGS. 4A and 4B refers to the magnet 213 of FIG. 2A.

In an embodiment, when the external electronic device 500 is located on the transmitting part 300, the external magnet 510 is disposed at a position corresponding to the transmitting part magnet 330. For example, the first external magnet 511 is disposed at a position corresponding to the first transmitting part magnet 331. The second external magnet 512 is disposed at a position corresponding to the second transmitting part magnet 332.

Referring to FIG. 4A, when the transmitting part magnet 330 is disposed in the second region 312 of the transmitting part housing 310, the external magnet 510 of the external electronic device 500 is disposed at a position corresponding to the transmitting part magnet located in the second region 312.

Referring to FIG. 3B, when the transmitting part magnet 330 is disposed in the first region 311 of the transmitting part housing 310, the external magnet 510 of the external electronic device 500 is disposed at a position corresponding to the transmitting part magnet located in the first region 311.

In an embodiment, an attraction force may act between the external magnet 510 and the transmitting part magnet 330. For example, when the external electronic device 500 is located on the transmitting part 300, the magnet 330 and the external magnet 510 have different poles facing each other, so that an attraction force is generated between the magnet 330 and the external magnet 510.

In an embodiment, when the external electronic device 500 is located on the transmitting part 300, the external electronic device 500 is disposed at a predetermined position using the attraction force acting (or generated) between the external magnet 510 and the transmitting part magnet 330. For example, by the attraction force acting between the external magnet 510 and the transmitting part magnet 330, the transmitting coil 320 of the transmitting part 300 is disposed to face the coil (see, e.g., 212 in FIG. 2A) of the external electronic device 500 with the transmitting part housing 310 interposed therebetween.

In an embodiment, power may be transmitted between the transmitting part 300 and the external electronic device 500 via the transmitting coil 320 of the transmitting part 300 and the coil (see, e.g., 212, in FIG. 2A) of the external electronic device 500.

In an embodiment, when the external electronic device 500 is located on the transmitting part 300, the first region 311 of the transmitting part housing 310 is in contact with the external electronic device 500. For example, the inner surface of the external electronic device 500 and the perimeter of the first region 311 of the transmitting part housing 310 each extend with the first radius of curvature R1, so that the inner surface of the external electronic device 500 is in contact with the perimeter of the first region 311 of the transmitting part housing 310.

Referring to FIG. 4C, the external electronic device 500 according to an embodiment has two different radii of curvature R1 and R3. In an embodiment, a partial area of the external electronic device 500 has the first radius of curvature R1, and the remaining area of the external electronic device 500 has the third radius of curvature R3 with reference to a third center C3. The third radius of curvature R3 may be longer than the first radius of curvature R1. For example, the region of the external electronic device 500 facing the first region 311 of the transmitting part housing 310 extends with the first radius of curvature R1, and the remaining region of the external electronic device 500 extends with the third radius of curvature R3.

In an embodiment, the third radius of curvature R3 is shorter than the second radius of curvature R1. In an embodiment, when the second region 312 of the transmitting part housing 310 has the second radius of curvature R2, the third radius of curvature R3 is longer than the second radius of curvature R2. In an embodiment, the third radius of curvature R3 is shorter than the first radius of curvature R1 and longer than the second radius of curvature R2.

In an embodiment, when the external electronic device 500 having the first radius of curvature R1 and the third radius of curvature R3 is located on the transmitting part 300, the inner surface of the external electronic device 500 facing the first region 311 of the transmitting part housing 310 (e.g., the surface of the external electronic device 500 facing the transmitting part housing 310) is in contact with the perimeter of the first region 311 of the transmitting part housing 310.

Referring to FIGS. 4A, 4B, and 4C, when the external electronic device 500 according to an embodiment is located on the transmitting part 300, the first region 311 of the transmitting part housing 310 is in contact with the external electronic device 500 and supports the external electronic device 500. Since the first region 311 of the transmitting part housing 310 is in contact with the external electronic device 500, movement of the external electronic device 500 by an external force is reduced, so that it may be easy for the external electronic device 500 to maintain a predetermined position.

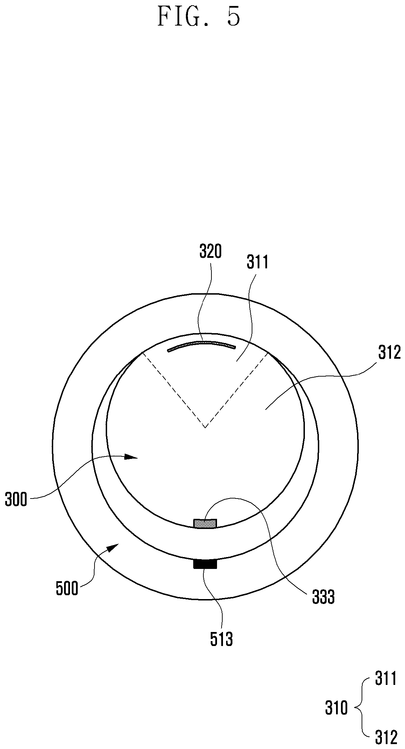

In an embodiment, since the transmitting part 300 extends such that the first region 311 and the second region 312 of the transmitting part housing 310 extend with different radii of curvature, external devices 400 and 500 having different sizes are located on the transmitting part 300. For example, referring to FIGS. 4A and 5, the external electronic device 400 of FIG. 3A having the second radius of curvature R2 and the external electronic device 500 of FIG. 4A having the first radius of curvature R1 are seated in contact with the transmitting part 300. According to an embodiment, since electronic devices 400 and 500 having different sizes are seated on the transmitting part 300, a separate mounting device for seating the electronic devices 400 and 500 having different sizes may be provided.

In an embodiment, the size of the transmitting part magnet 330 is larger than the size of the external magnet 510. For example, when it is difficult to provide a large space in the external electronic device 500 to dispose the external magnet 510, the transmitting part magnet 330 is formed to be relatively large in size. Thus, an attraction force of a predetermined level or higher is generated between the transmitting part magnet 330 and the external magnet 510.

Although FIGS. 4A, 4B, and 4C illustrate the external electronic device 500 having the first radius of curvature R1 in at least a portion thereof, the radius of curvature of the external electronic device 500 may not be limited thereto. For example, the external electronic device 500 may have a radius of curvature longer than the first radius of curvature R1 in a region corresponding to the first region 311 of the transmitting part housing 310. In this case, the external electronic device 500 is disposed in contact with a portion of the first region 311 of the transmitting part housing 310.

FIG. 5 is a view illustrating a third transmitting part magnet 333 and a third external magnet 513 according to an embodiment of the disclosure.

Referring to FIG. 5, according to an embodiment, the transmitting part 300 includes a third transmitting part magnet 333.

In an embodiment, the third transmitting part magnet 333 is disposed inside the transmitting part housing 310. For example, the third transmitting part magnet 333 may be disposed in the second region 312 of the transmitting part housing 310.

In an embodiment, the third transmitting part magnet 333 is disposed on the opposite side of the transmitting coil 320. For example, the third transmitting part magnet 333 may be disposed inside the transmitting part housing 310 to face a surface located in the opposite of the surface facing the transmitting coil 320.

Referring to FIG. 5, according to an embodiment, the external electronic device 500 includes a third external magnet 513.

In an embodiment, when the external electronic device 500 is located on the transmitting part 300, the third external magnet 513 is disposed at a position corresponding to the third transmitting part magnet 333.

In an embodiment, a repulsion force may be generated between the third transmitting part magnet 333 and the third external magnet 513. For example, when the external electronic device 500 is located on the transmitting part 300, the third transmitting part magnet 333 and the third external magnet 513 face each other with the same poles (e.g., N or S poles), so that a repulsion force is generated between the third transmitting part magnet 333 and the third external magnet 513.

In an embodiment, when the external electronic device 500 is located on the transmitting part 300, the external electronic device 500 is disposed in contact with the first region 311 of the transmitting part 300 by the repulsion force generated between the third external magnet 513 and the third transmitting part magnet 333. Since the external electronic device 500 is disposed in contact with the first region 311 of the transmitting part 300, movement of the external electronic device 500 by an external force is reduced, so that it is easy for the external electronic device 500 to maintain a predetermined position on the transmitting part 300.

Referring to FIGS. 4A and 5, when the external electronic device 500 is located on the transmitting part 300, the first region 311 of the transmitting part 300 and the inner surface of the external electronic device 500 are disposed in contact with each other, so that the distance between the transmitting coil 320 of the transmitting part 300 and the coil (see, e.g., 212 in FIG. 2A) of the external electronic device 500 may become closer. As the distance between the transmitting coil 320 of the transmitting part 300 and the coil of the external electronic device 500 (see, e.g., 212 in FIG. 2A) becomes closer, the coupling coefficient between the transmitting coil 320 and the coil (see, e.g., 212 in FIG. 2A) may have a predetermined value or more. For example, the coupling coefficient between the transmitting coil 320 and the coil (see, e.g., 212 in FIG. 2A) may have a value of about 0.2 or more.

In an embodiment, the transmitting part 300 includes all of a first transmitting part magnet 331 (see FIG. 3A), a second transmitting part magnet 332 (see FIG. 4A), and a third transmitting part magnet 333. When the transmitting part 300 includes all of the first transmitting part magnet 331 (see FIG. 4A), the second transmitting part magnet 332 (see FIG. 4A), and the third transmitting part magnet 333, the external electronic device 500 and the transmitting part 300 are brought into close contact using both attraction and repulsion forces, so that it may be easier for the external electronic device 500 to maintain a predetermined position on the transmitting part 300.

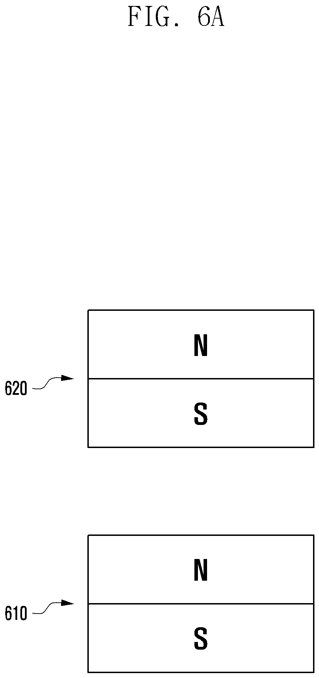

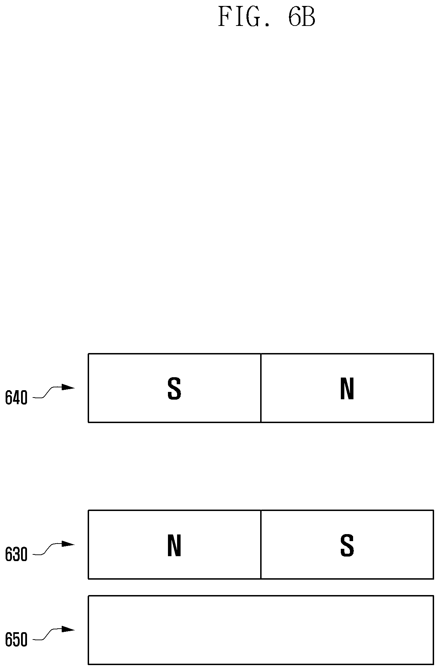

FIGS. 6A and 6B are views illustrating transmitting part magnets 610 and 630 and external magnets 620 and 640 according to an embodiment of the disclosure.

FIG. 6A is a view illustrating a transmitting part magnet 610 and an external magnet 620 according to an embodiment. FIG. 6B is a view illustrating a transmitting part magnet 630, an external magnet 640, and a guide member 650 according to an embodiment.

The transmitting part magnet 610 of FIG. 6A refers to the transmitting part magnet 330 of FIG. 3A. The external magnet 620 of FIG. 6A may refer to the external magnet 410 of FIG. 3A or the external magnet 510 of FIG. 5.

In an embodiment, the transmitting part magnet 610 and the external magnet 620 are disposed to face each other with different poles. For example, referring to FIG. 6A, the N pole of the transmitting part magnet 610 and the S pole of the external magnet 620 are disposed to face each other.

In an embodiment, the transmitting part magnet 610 and the external magnet 620 are disposed to face each other with different poles, so that an attraction force may be generated between the transmitting part magnet 610 and the external magnet 620.

In an embodiment, an external electronic device 400 or 500 (see FIGS. 3A and 4A) is disposed at a predetermined position on the transmitting part 300 (see FIG. 3A) by the attraction force generated between the transmitting part magnet 610 and the external magnet 620. For example, with the attraction force generated between the transmitting part magnet 610 and the external magnet 620, the coil 212 (see FIG. 2A) of the external electronic device 400 or 500 (see FIGS. 3A and 4A) is disposed to face the transmitting coil 320 (see FIG. 3A) of the transmitting part 300 (see FIG. 3A) with the transmitting part housing 310 (see FIG. 3A) interposed therebetween.

The transmitting part magnet 630 of FIG. 6B refers to the transmitting part magnet 330 of FIG. 3A. The external magnet 640 of FIG. 6B refers to the external magnet 410 of FIG. 3A or the external magnet 510 of FIG. 5.

Referring to FIG. 6B, the transmitting part magnet 630 and the external magnet 640 are disposed to face each other with different poles. For example, the N pole of the transmitting part magnet 630 and the S pole of the external magnet 640 are disposed to face each other, and the S pole of the transmitting part magnet 630 and the N pole of the external magnet 640 are disposed to face each other.

In an embodiment, the transmitting part magnet 630 and the external magnet 640 are disposed to face each other with different poles, so that an attraction force may be generated between the transmitting part magnet 630 and the external magnet 640.

In an embodiment, an external electronic device 400 or 500 (see FIGS. 3A and 4A) is disposed at a predetermined position on the transmitting part 300 (see FIG. 3A) by the attraction force generated between the transmitting part magnet 630 and the external magnet 640. For example, with the attraction force generated between the transmitting part magnet 630 and the external magnet 640, the coil 212 (see FIG. 2A) of the electronic device 400 or 500 (see FIGS. 3A and 4A) is disposed to face the transmitting coil 320 (see FIG. 3A) of the transmitting part 300 (see FIG. 3A) with the transmitting part housing 310 (see FIG. 3A) interposed therebetween.

Referring to FIG. 6B, according to an embodiment, the transmitting part magnet 630 is disposed such that N and S poles are alternately positioned. For example, the transmitting part magnet 630 has N poles and S poles alternately formed along the longitudinal direction thereof (e.g., the direction in which the transmitting part magnet 630 extends relatively long).

Referring to FIG. 6B, according to an embodiment, the external magnet 640 is disposed such that N and S poles are alternately positioned. For example, the external magnet 640 has N poles and S poles alternately formed along the longitudinal direction thereof (e.g., the direction in which the external magnet 640 extends relatively long).

In an embodiment, since the N and S poles of the transmitting part magnet 630 are alternately positioned along the longitudinal direction thereof, the spreading phenomenon of magnetic force lines generated by the transmitting part magnet 630 and the external magnet 640 may be reduced. As the spreading phenomenon of magnetic force lines is reduced, the magnetic force lines may be prevented or reduced from influencing the transmitting coil 320 (see FIG. 3A).

In an embodiment, the transmitting part 300 (see FIG. 3A) includes a guide member 650. Referring to FIG. 6B, the guide member 650 is disposed in one direction of the transmitting part magnet 630. For example, the guide member 650 is disposed in a direction opposite to the direction in which the transmitting part magnet 630 faces the external magnet 640.

In an embodiment, the guide member 650 is included in an external electronic device (e.g., 400 or 500 (see FIGS. 3A and 4A)). The guide member 650 is disposed in one direction of the external magnet 640 in an external electronic device (e.g., 400 or 500 (see FIGS. 3A and 4A)). For example, the guide member 650 may be disposed in a direction opposite to the direction in which the external magnet 640 faces the transmitting part magnet 630.

In an embodiment, the guide member 650 includes a steel plate cold commercial (SPCC).

In an embodiment, the guide member 650 serves to guide magnetic force lines generated by the transmitting part magnet 630 and the external magnet 640. The guide member 650 guides the magnetic force lines, so that the attraction force generated between the transmitting part magnet 630 and the external magnet 640 may be improved.

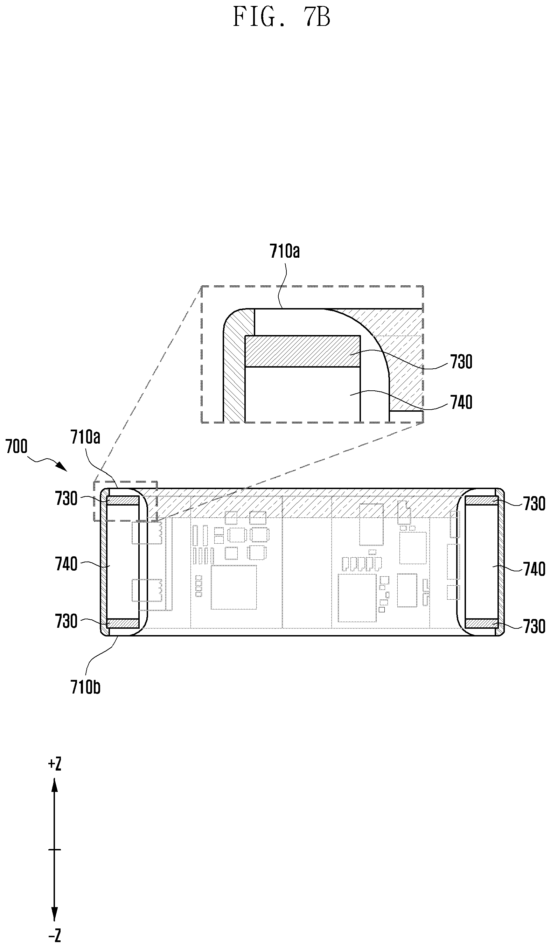

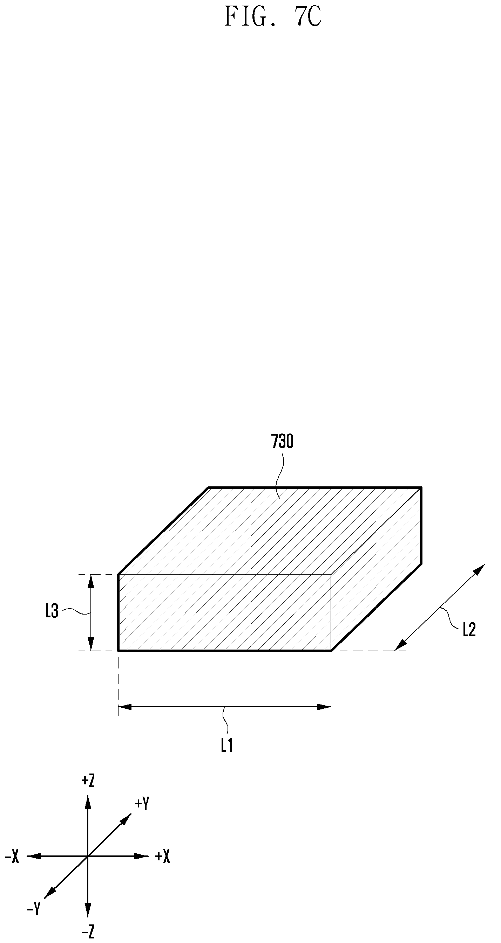

FIGS. 7A, 7B, and 7C are views illustrating an external electronic device 700 and magnets 730 according to an embodiment of the disclosure.

FIG. 7A is a view illustrating an external electronic device 700 according to an embodiment. FIG. 7B is a view illustrating the external electronic device 700 taken along line A-A' indicated in FIG. 7A. FIG. 7C is a view illustrating the magnet 730 according to an embodiment.

The external electronic device 700 of FIG. 7A refers to the first electronic device 210 of FIG. 2A, the external electronic device 400 of FIG. 3A, or the external electronic device 500 of FIG. 4A, or may include at least some of the components of the first electronic device 210 and the external electronic devices 400 and 500.

In an embodiment, the external electronic device 700 is a device that is wearable on a portion of a user's body. For example, the user of the external electronic device 700 may use the external electronic device 700 while the external electronic device 700 is worn on a portion of the user's body (e.g., a finger).

The external electronic device 700 according to an embodiment of the disclosure may include an insertion opening 705, a housing 710, a molded part 715, a coil 720, magnets 730, a battery 740, and/or a printed circuit board 750.

In an embodiment, the housing 710 is substantially the same as the housing 211 of FIG. 2A. The coil 720 is substantially the same as coil 212 of FIG. 2A. The magnets 730 are substantially the same as the magnets 213 of FIG. 2A. The battery 740 is substantially the same as the battery 214 of FIG. 2A. The insertion opening 705 is substantially the same as the insertion opening 215 of FIG. 2A.

In an embodiment, the magnets 730 refer to the external magnets 410 of FIG. 3A or the external magnets 510 of FIG. 4A.

In an embodiment, the housing 710 forms the exterior of the external electronic device 700. In an embodiment, the housing 710 is formed in a ring shape. For example, the housing 710 may have the form of the circumference of a circle having a predetermined radius.

According to an embodiment, other components of the external electronic device 700 are disposed in the housing 710 (e.g., the inner space of the housing 710). For example, the coil 720, the magnets 730, the battery 740, and the printed circuit board 750 may be disposed inside the housing 710 (e.g., the inner space of the housing 710).

In an embodiment, a molded part 715 is provided inside the housing 710. For example, after the coil 720, the magnet 730, the battery 740, and the printed circuit board 750 are placed in the housing 710, the molding material is applied to cover the coil 720, the magnets 730, and the battery 740, and the printed circuit board 750, and the molded part 715 is formed.

In an embodiment, the molded part 715 serves to fix the positions of the components of the external electronic device 700 disposed in the housing 710.

In an embodiment, the molded part 715 is a part that comes into contact with a portion of the body of a user wearing the external electronic device 700. In an embodiment, the molded part 715 is formed by curing a molding material (e.g., resin).

In an embodiment, the external electronic device 700 does not include the molded part 715. When the external electronic device 700 does not include the molded part 715, the housing 710 may be formed to surround other components of the external electronic device 700 (e.g., the coil 720, the magnets 730, or the battery 740).

In an embodiment, when the external electronic device 700 does not include the molded part 715, a case structure configured to surround other components of the external electronic device 700 (e.g., the coil 720, the magnets 730, or the battery 740) may be coupled to the housing 710. In an embodiment, the case structure may include plastic and/or metal. When the case structure according to an embodiment includes metal, the case structure may be coupled to the housing 710 at a position that does not overlap the coil 720.

In an embodiment, the external electronic device 700 includes an insertion opening 705 located inside the housing 710. When the user of the external electronic device 700 wears the external electronic device 700, a portion of the user's body is inserted into the insertion opening 705.

In an embodiment, the coil 720 serve to transmit or receive power to or from a device located outside the external electronic device 700. For example, the external electronic device 700 may receive power from an external device (e.g., the second electronic device 220 of FIG. 2A) using the coil 720.

In an embodiment, the magnets 730 serve to induce the external electronic device 700 to be disposed at a predetermined position on a mounting device (e.g., the second electronic device 220 in FIG. 2A) when disposed on the mounting device. For example, with the attraction force generated between the magnet 730 and the magnets 2212 and 2223 (see FIG. 2A) of a mounting device (e.g., the second electronic device 220 in FIG. 2A), the external electronic device 700 is disposed at a predetermined position on the mounting device (e.g., the second electronic device 220 in FIG. 2A).

In an embodiment, the battery 740 serves to supply power to at least one component of the external electronic device 700. In an embodiment, the battery 740 is electrically connected to the printed circuit board 750.

In an embodiment, a processor (e.g., the processor 120 in FIG. 1) and/or memory (e.g., the memory 130 in FIG. 1) is mounted on the printed circuit board 750. The processor includes one or more of, for example, a central processing unit, an application processor, a graphics processing unit, an image signal processor, a sensor hub processor, or a communication processor. According to an embodiment, the memory includes, for example, volatile memory or nonvolatile memory. In an embodiment, a power management integrated circuit (PMIC) may be mounted on the printed circuit board 750.

In an embodiment, magnets 730 are disposed symmetrically with respect to the coil 720. For example, referring to FIG. 7A, the magnet 730 is disposed at a distance from one end of the coil 720 and the other end of the coil 720, respectively.

Referring to FIG. 7A, according to an embodiment, the coil 720 is located on the opposite side of the printed circuit board 750. According to an embodiment, the coil 720 extends in a symmetrical form with respect to a center line M passing through the center of the printed circuit board 750. In an embodiment, two magnets 730 are disposed at symmetrical positions with respect to the center line M passing through the center of the printed circuit board 750.

According to an embodiment, the housing 710 includes a first side surface 710b and/or a second side surface 710b. Referring to FIG. 7B, the first side surface 710a refers to the surface of the housing 710 that is oriented in the positive Z-axis direction. The second side surface 710b refers to the surface of the housing 710 that is oriented in the negative Z-axis direction.

In an embodiment, one side of the battery 740 refers to the side surface of the battery 740 that is oriented in the positive Z-axis direction. The other side of the battery 740 refers to the side surface of the battery 740 that is oriented in the negative Z-axis direction.

Referring to FIG. 7B, according to an embodiment, the magnets 730 are disposed between the side surfaces 710a and 710b of the housing 710 and the battery 740. For example, a magnet 730 is disposed between the battery 740 and the first side surface 710a of the housing 710 on one side of the battery 740. A magnet 730 is disposed between the second side surface 710b of the housing 710 and the battery 740 on the other side of the battery.

In an embodiment, since empty spaces between the side surfaces 710a and 710b of the housing 710 and the battery 740 are used to dispose the magnets 730 in the external electronic device 700, the external electronic device 700 may not require a separate space to place the magnets 730.

According to an embodiment, the magnets 730 may include a rectangular parallelepiped shape. For example, referring to FIG. 7C, the magnets 730 may have a substantially rectangular parallelepiped shape.

In an embodiment, the magnets 730 have a first length L1 in the longitudinal direction (e.g., the X-axis direction). The magnets 730 have a second length L2 in the width direction (e.g., the Y-axis direction). The magnets 730 have a third length L3 in the height direction (e.g., the Z-axis direction).

In an embodiment, the first length L1 may be about 2 mm or more. The second length L2 may be about 2 mm or more. The third length L3 may be about 5 mm or more.

FIG. 7C illustrates a magnet 730 in a rectangular parallelepiped shape, but this is an example. According to an embodiment, the shape of the magnet 730 may not be limited to the rectangular parallelepiped shape. For example, the magnet 730 may be formed to include a curved surface at least in part.

According to an embodiment of the disclosure, an electronic device (e.g., the second electronic device 200 in FIG. 2A) includes a seating part 221, and a transmitting part 222 or 300 protruding from the seating part 221. The transmitting part 300 includes a transmitting part housing 310 that forms the exterior of the transmitting part 300, and a transmitting coil 320 disposed inside the transmitting part housing 310 and used to transmit power 320 to an external electronic device 210, 400, 500, or 700. The transmitting part housing 310 includes a first region 311 in which the transmitting coil 320 is disposed and which extends with a first radius of curvature R1, and a second region 312 which extends from the first region 311 with a second radius of curvature R2 that is smaller than the first radius of curvature R1. In an embodiment, the length of the second region 312 that extends along the perimeter of the transmitting part housing 310 is longer than the length of the first region 311 that extends along the perimeter of the transmitting part housing 310.

In an embodiment, when the external electronic device is a first external electronic device (e.g., the external electronic device 500 in FIG. 4A) disposed in the electronic device 220 and having a first radius of curvature R1, the first region 311 is in contact with a portion of the inner surface of the first external electronic device 500 (e.g., the inner surface of the first external electronic device 500).

In an embodiment, when the external electronic device is a second external electronic device (e.g., the external electronic device 400 in FIG. 3) disposed in the electronic device 220 and having a second radius of curvature R2, the second region 312 is in contact with a portion of the inner surface of the second external electronic device 400 (e.g., the inner surface of the second external electronic device 400).

In an embodiment, the electronic device (e.g., the second electronic device 220 in FIG. 2A) may include a magnet (e.g., the transmitting part magnet 330) disposed inside the transmitting part 300, and when the external electronic device 400 or 500 is placed on the seating part 221 of the electronic device 220, the magnet 330 is aligned with a magnet (e.g., the external magnet 410 or 510) included in the external electronic device 400 or 500.

In an embodiment, the magnet (e.g., the transmitting part magnet 330) includes a first magnet (e.g., the first transmitting part magnet 331) disposed adjacent to a peripheral surface of the transmitting part housing 310 and located on one side of the first region 311 and a second magnet (e.g., the second transmitting part magnet 332) disposed adjacent to the peripheral surface of the transmitting part housing 310 and located on the other side of the first region 311.

In an embodiment, the length of the first region 311 that extends along the perimeter of the transmitting part housing 310 is longer than the extending length of the transmitting coil 320.

In an embodiment, when the external electronic device 400 or 500 is disposed on the electronic device 220, an attraction force is generated between a magnet (e.g., the magnet in the transmitting part 330) and a magnet (e.g., the external magnet 410 or 510) included in the external electronic device 400 or 500, and the transmitting coil 320 is aligned with a receiving coil (e.g., the coil 212 in FIG. 2A) included in the external electronic device 400 or 500 to receive wireless charging power supplied from the electronic device 220.

In an embodiment, the magnet (e.g., the transmitting part magnet 333) is disposed to face a region of the peripheral surface of the transmitting part housing 310 located in the opposite direction to the transmitting coil 320, and when the external electronic device 500 is disposed on the electronic device 220, a repulsion force is generated between the magnet (e.g., the transmitting part magnet 333) and the magnet (e.g., the external magnet 513) included in the external electronic device 500.

In an embodiment, the electronic device (e.g., the second electronic device 220 in FIG. 2A) may include a magnet (e.g., the seating part magnet 2212) disposed inside the seating part 221, and when the external electronic device 400 or 500 is disposed on the seating part 221 of the electronic device 220, the magnet (e.g., the seating part magnet 2212) is aligned with the magnet (e.g., the external magnet 410 or 510) included in the external electronic device 400 or 500.

In an embodiment, the external electronic device 700 includes a housing 710 extending in a ring shape, a printed circuit board 750 disposed inside the housing 710, and a coil 720 disposed inside the housing 710 and configured to transmit and receive power.

In an embodiment, the transmitting part magnet 630 is disposed so that the N pole and the S pole alternately face the peripheral surface of the transmitting part housing 310.

In an embodiment, the electronic device 220 further includes a guide member 650 disposed in one direction of the transmitting part magnet 630.

According to an embodiment of the disclosure, the power charging system 200 for an electronic device includes a first electronic device (e.g., 210, 400, 500, or 700) including a housing 211 formed in a ring shape including an insertion opening 215, and a coil 212 disposed inside the housing 211 and configured to transmit and receive power, and a second electronic device 220 on which the first electronic device 210 is disposed thereon and which is configured to transmit power to the first electronic device 210. In an embodiment, the second electronic device 220 includes a seating part 221 that supports the first electronic device 210 on one surface and a transmitting part 222 or 300 that protrudes from the seating part 221 and is inserted into an insertion opening 215 in the first electronic device 210. The transmitting part 222 or 300 includes a transmitting part housing 2221 or 310, which forms the exterior of the transmitting part 222 or 300, and a transmitting coil 2222 or 320 disposed inside the transmitting part housing 2221 or 310 and configured to transmit power to the first electronic device 210. The transmitting part housing 310 includes a first region 311 in which the transmitting coil 320 is disposed and which extends with a first radius of curvature R1, and a second region 312 which has a second radius of curvature R2 that is smaller than the first radius of curvature R1 and extends from the first region 311.

In an embodiment, when the first electronic device is a first external electronic device (e.g., the external electronic device 500 in FIG. 4A) having a first radius of curvature R1, the first region 311 is in contact with a portion of the inner surface of the first external electronic device 500 (e.g., the inner surface of the first external electronic device 500).

In an embodiment, when the first electronic device is a second external electronic device (e.g., the external electronic device 400 in FIG. 3A) having a second radius of curvature R2, the second region 312 is in contact with a portion of the inner surface of the second external electronic device 400 (e.g., the inner surface of the second external electronic device 400).

In an embodiment, the first electronic device 210 includes a magnet 410 or 510 disposed inside the housing, and the second electronic device 220 includes a magnet (e.g., a transmitting part magnet 330) disposed inside the transmitting part.

In an embodiment, when the first electronic device 210 is located on the second electronic device 220, the magnet (e.g., the transmitting part magnet 330) of the second electronic device 220 is aligned with the magnet 410 or 510 of the first electronic device 210.

In an embodiment, in the state in which the transmitting part 222 or 300 is inserted into the insertion opening 215 in the first electronic device 210, an attraction force is generated between the magnet (e.g., the transmitting part magnet 2223 or 330) of the second electronic device 220 and the magnet 213 of the first electronic device 210, and the transmitting coil 2222 or 320 is aligned with the coil 212 of the first electronic device 210.

In an embodiment, the transmitting part magnet 630 of the transmitting part 222 or 300 is disposed such that the N and S poles alternately face the peripheral surface of the transmitting part housing 310, and the magnet 640 of the housing 211 is disposed such that the N pole faces the S pole of the transmitting part magnet, and the S pole faces the N pole of the transmitting part magnet.

In an embodiment, the first electronic device 210 or 700 includes a battery 740 disposed inside a housing 710, and magnets 730 are disposed between side surfaces 710a and 710b of the housing 710 and the battery 740.

In an embodiment, the first electronic device 210 includes a magnet 213 disposed inside the housing 211, and the second electronic device 220 includes a magnet disposed inside the seating part 221 (e.g., the seating part magnet 2212). In an embodiment, when the first electronic device 210 is located on the second electronic device 220, the magnet (e.g., the seating part magnet 2212) of the second electronic device 220 is aligned with the magnet 213 of the first electronic device 210.

According to an embodiment of the disclosure, an electronic device (e.g., the external electronic device 700 in FIGS. 7A, 7B, and 7C) includes a housing 710 extending in a ring shape, a battery 740 disposed inside the housing 710, a printed circuit board 750 disposed inside the housing 710 and electrically connected to the battery 740, a coil 720 disposed inside the housing 710 and configured to transmit and receive power, and a magnet 730 disposed between each of the side surfaces 710a and 710b of the housing 710 and the battery 740.

In an embodiment, when an electronic device (e.g., the external electronic device 700 of FIGS. 7A, 7B, and 7C) is located on an external charging device 220, an attraction force is generated between the magnet 730 of the electronic device 700 and the magnet 330 of the charging device 220, and the coil 720 of the electronic device 700 are aligned with the transmitting coil 320 of the charging device 220.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively," as "coupled with,""coupled to," "connected with," or "connected to" another element (e.g., a second element), it means that the element may be coupled with the other element directly (e.g., through wires), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration.

According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (220) comprising:
a seating part (221); and
a transmitting part (222, 300) protruding from the seating part (221),
wherein the transmitting part (222, 300) comprises:
a transmitting part housing (310) that forms the exterior of the transmitting part (222, 300); and
a transmitting coil (320) disposed inside the transmitting part housing (310) and operable to transmit power to an external electronic device (210),
wherein the transmitting part housing (310) comprises:
a first region (311) in which the transmitting coil (320) is disposed and which is formed with a first radius of curvature (R1); and
a second region (312) extending from the first region (311) with a second radius of curvature (R2) that is smaller than the first radius of curvature (R1).

2. The electronic device (220) of claim 1, wherein a length of the second region (312) extending along the perimeter of the transmitting part housing (310) is longer than a length of the first region (311) extending along the perimeter of the transmitting part housing (310).

3. The electronic device (220) of claim 1,
wherein, in case that the external electronic device (210) is a first external electronic device (500) with the first radius of curvature (R1) disposed in the electronic device (220), the first region (311) is configured to contact a portion of an inner surface of the first external electronic device (500), and
wherein, in case that the external electronic device (210) is a second external electronic device (400) with the second radius of curvature (R2) disposed in the electronic device (220), the second region (312) is configured to contact a portion of an inner surface of the second external electronic device (400).

4. The electronic device (220) of claim 1, further comprising a magnet (330) disposed inside the transmitting part (222, 300),
wherein the magnet (330) is configured to align with a magnet (410, 510) included in the external electronic device (210) when the external electronic device (210) is placed on the seating part (221) of the electronic device (220);
wherein the magnet (330) disposed inside the transmitting part (222, 300) comprises:
a first magnet (331) disposed adjacent to a circumference wall of the transmitting part housing (310) and located on a first side of the first region (311); and
a second magnet (332) disposed adjacent to the circumference wall of the transmitting part housing (310) and located on a second side, different to the first side, of the first region (311).

5. The electronic device (220) of claim 1, wherein the length of the first region (311) extending along the perimeter of the transmitting part housing (310) is longer than the length along which the transmitting coil (320) extends.

6. The electronic device (220) of claim 4, wherein an attraction force is generated between the magnet (330) disposed inside the transmitting part (222, 300) and the magnet (410, 510) included in the external electronic device (210) when the external electronic device (210) is disposed in the electronic device (220) so that the transmitting coil (320) is aligned with a receiving coil included in the external electronic device (210) for receiving wireless charging power supplied by the electronic device (220).

7. The electronic device (220) of claim 4,
wherein the magnet (330) disposed inside the transmitting part (222, 300) is disposed to face an area of the circumference surface of the transmitting housing (310) located in the opposite direction to the transmitting coil (320), and
wherein the repulsion force is generated between the magnet (330) disposed inside the transmitting part (222, 300) and a magnet (513) included in the external electronic device.

8. The electronic device (220) of claim 4, further comprising a magnet (2212) disposed inside the seating part (221),
wherein the magnet (2212) is configured to align with a magnet (410, 510)) included in the external electronic device (210) when the external electronic device (210) is placed on the seating part (221) of the electronic device (220).

9. The electronic device (220) of any of claim 1 to 8, wherein the external electronic device (210) comprises:
a housing (710) formed in a ring shape;
a printed circuit board (750) disposed inside the housing (710) ; and
a coil (720) disposed inside the housing (710) for transmitting and receiving power.

10. A power charging system (200), the power charging system comprising:
a first electronic device (210) comprising a housing (211) formed in a ring shape including an insertion opening (215) and a coil (212) disposed inside the housing (211) and configured to transmit and receive power; and
a second electronic device (220) configured to receive the first electronic device (210), wherein the second electronic device (220) is configured to transmit power to the first electronic device (210),
wherein the second electronic device (220) comprises:
a seating part (221) configured to support the first electronic device (210) on one surface; and
a transmitting part (222, 300) protruding from the seating part (221) and receivable in an insertion opening in the first electronic device (210),
wherein the transmitting part (222, 300) comprises:
a transmitting part housing (310) that forms the exterior of the transmitting part (222, 300); and
a transmitting coil (320) disposed inside the transmitting part housing (310) and used to transmit power to the first electronic device (210), and
wherein the transmitting part housing (310) comprises:
a first region (311) in which the transmitting coil (320) is disposed and having a first radius of curvature (R1); and
a second region (312) extending from the first region (311) with a second radius of curvature (R2) that is smaller than the first radius of curvature (R1).

11. The power charging system (200) of claim 10, wherein a length of the second region (312) extending along the perimeter of the transmitting part housing (310) is longer than a length of the first region (311) extending along the perimeter of the transmitting part housing (310),
wherein, in the case that the first electronic device (210) is a first external electronic device (500) with the first radius of curvature disposed in the electronic device (220), the first region (311) is configured to contact a portion of an inner surface of the first external electronic device (500), and
wherein, in the case that the first electronic device (210) is a second external electronic device (400) with the second radius of curvature disposed in the electronic device (220), the second region is configured to contact a portion of an inner surface of the second external electronic device (400).

12. The power charging system (200) of claim 10, wherein the first electronic device (210) further comprises a magnet (410, 510) disposed inside the housing (211) and a battery (740) disposed inside the housing (211),
wherein the magnet (410, 510) of the first electronic device (210) is disposed between a side surface (710a, 710b) of the housing (211) and the battery (740),
wherein the second electronic device (220) further comprises a magnet (330) disposed inside the transmitting part (222, 300),
wherein, in the case that the first electronic device (210) is located on the second electronic device (220), the magnet (330) of the second electronic device (220) is configured to align with the magnet (410, 510) of the first electronic device (210), and
wherein the magnet (330) of the second electronic device (220) comprises:
a first magnet (331) disposed adjacent to a peripheral surface of the transmitting part housing (310) and located at one side of the first region; and
a second magnet (332) disposed adjacent to a peripheral surface of the transmitting part housing (310) and located at another side of the first region.

13. The power charging system (200) of claim 10, wherein the length of the first region that extends along a perimeter of the transmitting part housing (310) is longer than the extent of the transmitting coil (320), and
wherein, in a state in which the transmitting part (222, 300) is inserted into the insertion opening (215) in the first electronic device (210), an attraction force is generated between the magnet (330) of the second electronic device (220) and the magnet (410, 510) of the first electronic device (210), and the transmitting coil (320) is aligned with the coil (212) of the first electronic device (210).

14. An electronic device (700) comprising:
a housing (710) having a ring shape;
a battery (740) disposed inside the housing (710);
a printed circuit board (750) disposed inside the housing (710) and electrically connected to the battery (740);
a coil (720) disposed inside the housing (710) and configured to transmit and receive power; and
a magnet (730) disposed between a side surface (710a, 710b) of the housing (710) and the battery (740).

15. The electronic device (700) of claim 14, configured such that, in the case that the electronic device (700) is located on an external charging device (220), an attraction force is generated between the magnet (730) of the electronic device (700) and a magnet (330) of the charging device (220), and the coil (720) of the electronic device (700) is aligned with a transmitting coil (320) of the charging device (220).
